(19) Europäisches Patentamt / European Patent Office / Office européen des brevets

(11) **EP 2 309 449 B1**

## (12) EUROPEAN PATENT SPECIFICATION

(45) Date of publication and mention
of the grant of the patent:
**20.04.2016 Bulletin 2016/16**

(51) Int Cl.:
***G06T 5/00*** *(2006.01)*      ***G06T 5/50*** *(2006.01)*

(21) Application number: **09172662.0**

(22) Date of filing: **09.10.2009**

(54) **Method to produce a full-color smoothed image**

Verfahren zur Herstellung eines vollfarbigen, geglätteten Bildes

Procédé de génération d'une image lissée et en couleurs

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**13.04.2011 Bulletin 2011/15**

(73) Proprietor: **EPFL Ecole Polytechnique Fédérale de Lausanne**
**1015 Lausanne (CH)**

(72) Inventors:
• **Fredembach, Clément**
**1077, Servion (CH)**
• **Süsstrunk, Sabine**
**1007, Lausanne (CH)**

(74) Representative: **Leman Consulting S.A.**
**Chemin de Précossy 31**
**1260 Nyon (CH)**

(56) References cited:
**EP-A2- 1 675 384**

• **FREDEMBACH C ET AL: "Colouring the near-infrared" FINAL PROGRAM AND PROCEEDINGS; IS AND T/SID COLOR IMAGING CONFERENCE (16TH COLOR IMAGING CONFERENCE: COLOR SCIENCE AND ENGINEERING SYSTEMS, TECHNOLOGIES, AND APPLICATIONS; NOVEMBER 10 - 15, 2008, PORTLAND, OREGON, OR, US),, 10 November 2008 (2008-11-10), pages 176-182, XP009134437 ISBN: 978-0-89208-281-0**

• **XIAOPENG ZHANG ET AL: "Enhancing photographs with Near Infra-Red images" COMPUTER VISION AND PATTERN RECOGNITION, 2008. CVPR 2008. IEEE CONFERENCE ON, IEEE, PISCATAWAY, NJ, USA, 23 June 2008 (2008-06-23), pages 1-8, XP031297383 ISBN: 978-1-4244-2242-5**

• **YAN-LI LIU ET AL: "Pores-Preserving Face Cleaning Based on Improved Empirical Mode Decomposition" JOURNAL OF COMPUTER SCIENCE AND TECHNOLOGY, KLUWER ACADEMIC PUBLISHERS, BO, vol. 24, no. 3, 26 May 2009 (2009-05-26), pages 557-567, XP019691808 ISSN: 1860-4749**

• **DONG GUO ET AL: "Digital face makeup by example" COMPUTER VISION AND PATTERN RECOGNITION, 2009. CVPR 2009. IEEE CONFERENCE ON, IEEE, PISCATAWAY, NJ, USA, 20 June 2009 (2009-06-20), pages 73-79, XP031607360 ISBN: 978-1-4244-3992-8**

• **IGARASHI T ET AL: "The appearance of human skin: a survey", FOUNDATIONS AND TRENDS IN COMPUTER GRAPHICS AND VISION, NOW PUBLISHERS INC.,HANOVER, MA, US, vol. 3, no. 1, 1 January 2007 (2007-01-01) , pages 1-95, XP009134917, ISSN: 1572-2740**

## Description

### Introduction

Portraiture is one of the most important part of photography and large efforts have been undertaken to enhance such images. In fact, while a number of potential artefact, or unattractive details, are induced by the capturing process, e.g., red eyes, blur, colour shifts, a number of such unwanted details are "intrinsic" to the photographed person, e.g., wrinkles, freckles, spots. As a result, many techniques are employed by models and photographers alike to mask, or correct, these less appealing features, from make-up to image editing software to print airbrushing.

### Prior Art

While current research has had success in correcting the deficiencies due to the capturing process, notably in red-eye removal [8], face detection for accurate focusing [6], and skin tones enhancement via correct white balancing, local improvement of the skin is still done in a time-consuming manual way, either as pre or post image capture (i.e., the application of makeup or the use of specialised software).

The focus of our work is to provide a method to automatically remove or attenuate the visibility of skin features that can be deemed less appealing. The two main constraints of such an approach are that skin tones ought to look realistic after the processing, and that important high-frequency details (e.g., eyes, hairs) of the images are preserved. Additionally, we do not want to rely on skin detection methods or 3D face modelling, as they can be of limited precision and usefulness when confronted with different skin types and capture conditions [3,4].

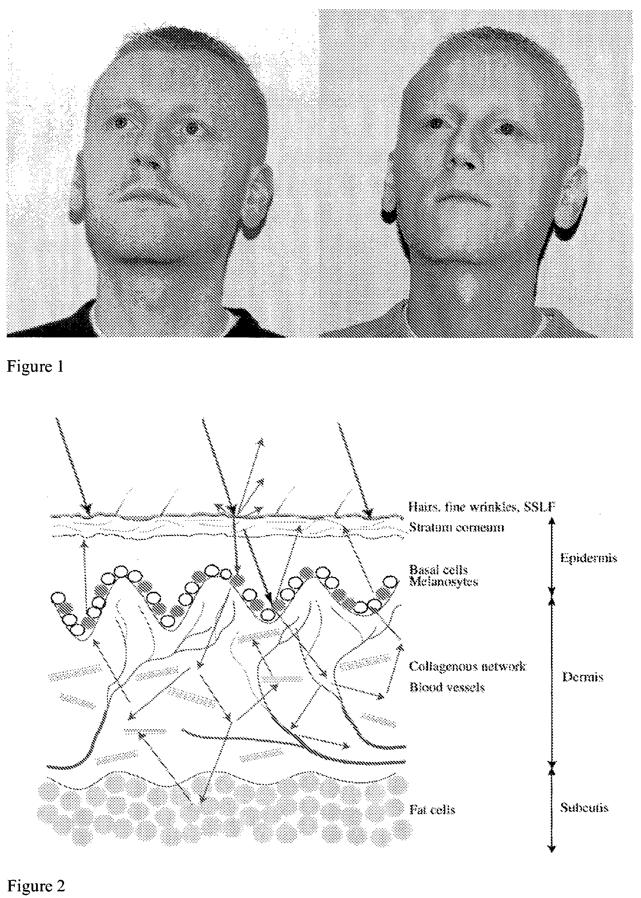

Rather, we propose to look beyond the conventional visible spectrum (400-700 nm) and into the near-infrared (NIR) part of the electromagnetic spectrum (700-1100 nm). Li et al. [11] have shown that NIR portrait images were easier to perform recognition on than visible, colour, images. A pair comparison of the same portrait in the visible and NIR bands is shown in Fig. 1, where the difference in smoothness can be observed together with the preservation of the face's details. Explanations of these phenomena are given in the detailed description.

Our goal, a smooth yet realistic colour image, does, however, requires to "fuse" or combine the information from the visible and NIR images in an appropriate manner. The document XP009134437, Fredembach and Süsstrunk, ""Colouring the near-infrared" [7], proposed that one could obtain colour images with a NIR look simply by treating the NIR channel as luminance-related information and substituting it to the original visible images. Another visible/NIR fusion approach focusing on the dehazing problem [12] uses a multi-level decomposition of the image to maximise local contrast across the visible and NIR channels. The resulting dehazed images are physically accurate and exhibit a smaller colour shift, but globally the approach is opposite to our smoothing goal. Indeed, fusion methods are generally focused towards maximising the amount of information present in all the considered channels, whereas our goal here is to preserve only relevant details (e.g., eyes, hairs) while removing unwanted ones.

Document EP 1 675 384 A2 relates to an image processing apparatus and method that can reduce noises in an image picked up in a natural light. To this end, this document suggests acquiring a visible light image and an infrared light image corresponding to the visible light image. The pixel values of the visible light image are firstly boosted by a gain adjustment section. Then a matrix section transforms the visible light RGB image into a color image and a luminance image. In order to remove noises from these images, a color low pass filter is applied to the color image and a luminance low pass filter detects edges from the infrared image and also removes noises from the luminance image. Then, the filtered luminance image is processed together with a detail image issued from the infrared image to obtain a synthetic image. This synthetic image is combined with the filtered color image so as to recover an RGB image after being processed by an inverse matrix section.

Document XP031297383, Xiaopeng Zhang et AI, "Enhancing photographs with Near Infra-Red images" [17], suggests a method to enhance a visible light photograph by using the contrast and texture information of its corresponding NIR image. To this end, this document teaches to decompose the NIR and visible pair of images into average and detail wavelet subbands. Then, the contrast is transferred in the average subband and the texture is transferred in the detail subbands.

### Brief description of the invention

The present invention aims at providing a method to produce modified images of a human face while removing all defects, such as such as pigmentation irregularities (e.g., moles, freckles), irritation, roughness, or wrinkles This is achieved thanks to a method to produce a full-color smoothed image comprising the steps of :

- acquiring a first image in the visible spectrum of a scene,

- acquiring a second image in the near infra-red spectrum of the same or similar scene,

- decomposing the first image into intensity information and color information,

- extracting the intensity information from the first image, leading to an image that contains greyscale pixel values,

- decomposing the intensity information from the first image into a first detail layer and a first base layer,

- decomposing intensity information of the second image into a second detail layer and a second base layer,

- combining at least all or part of the second detail layer with all or part of the first base layer to produce a combined intensity information,

- combining the color information of the first image directly and without filtering with the combined intensity information to produce the full-color smoothed image.

Our approach is as follows. Since NIR images contain all of a face's important features but (almost) none of the unwanted ones, it is a perfect candidate to be a detail layer. The visible image, on the other hand, contains the desired brightness and colour information, and is thus an ideal base layer.

In the following, we define base layer as the part of the image that contains mostly large-scale information (e.g., face, nose, ears) and brightness and colour levels. The detail layer on the other hand is devised to contain mostly edges and contours (e.g., hairs, moles, freckles). They are not necessarily distinct depending on the method employed to obtain them. Common algorithms to decompose an image into such layers include Gaussian filtering, frequency domain decomposition (Fourier, wavelets, curvelets, etc.), Unsharp masking, all variants of the bilateral filter, weighted least squares decomposition, and so on.

It follows that one can decompose the NIR and visible images into detail and base layers, either in the spatial or in the frequency domain, and then combine the NIR detail layer with the visible base layer to obtain an enhanced, realistic, image. Results show that the fast bilateral filter [5] is a good candidate as a decomposition function, and that realistic results are obtained across various skin types. however, other decomposition methods can also be employed.

**Brief description of the figures**

The present invention will be better understood thanks to the attached figures in which:

- Figure 1 : Visible and NIR representation of a portrait.

- Figure 2 : A schematic figure illustrating the different layers of the skin

- Figure 2 : Absorption spectra of hemoglobin and melanin

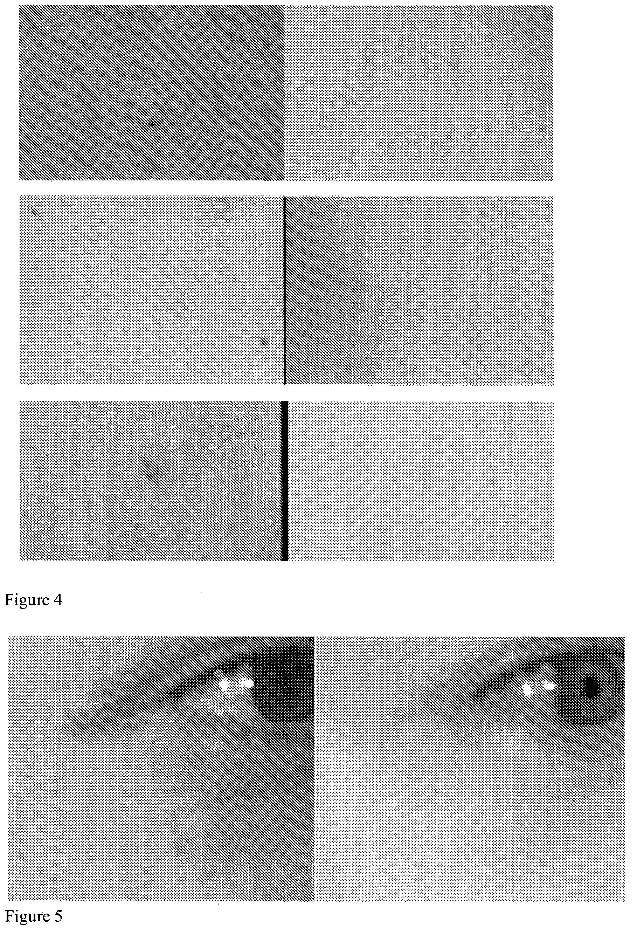

- Figure 4 : Visible and NIR image pairs of freckles, spots, and moles.

- Figure 5: Eye corner wrinkles. The NIR image, due to greater light penetration in skin, appears smoother.

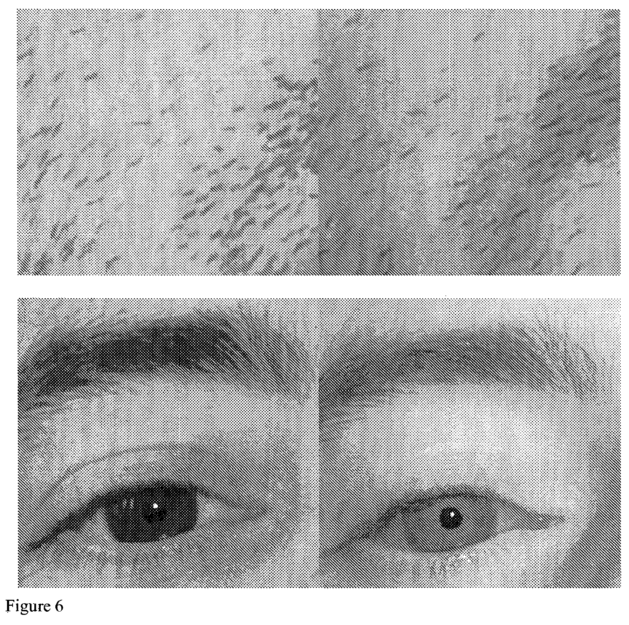

- Figure 6 : Visible and NIR image pairs of important facial details that have to be preserved.

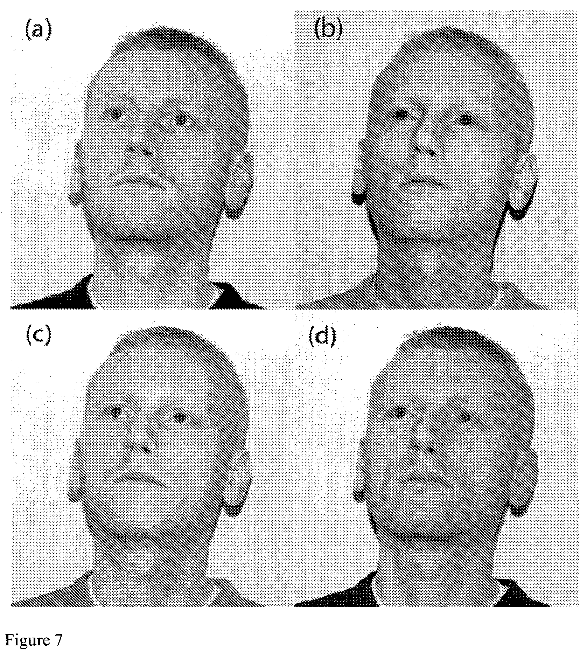

- Figure 7: **(a)** The original colour portrait. **(b)** Smoothing with luminance transfer **(c)** Smoothing using wavelet coefficient fusion **(d)** Smoothing using the fast bilateral filter method

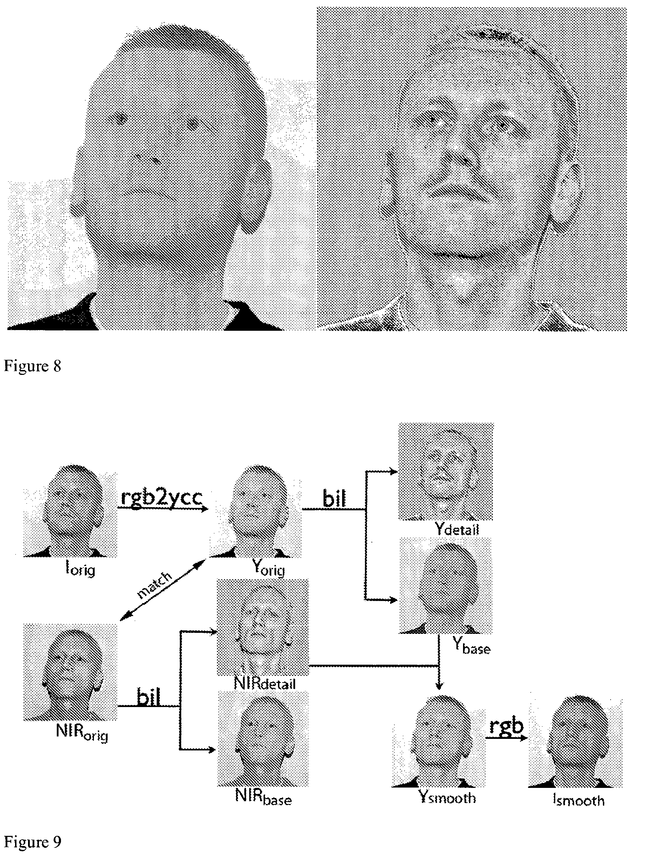

- Figure 8 : The base and detail layers of the visible portrait of Fig. 7a.

- Figure 9 : Flowchart detailing the bilateral filter layer merging procedure.

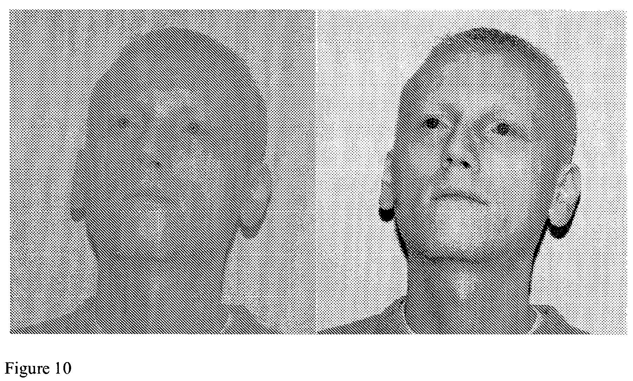

- Figure 10 : The result of adjusting NIR brightness.

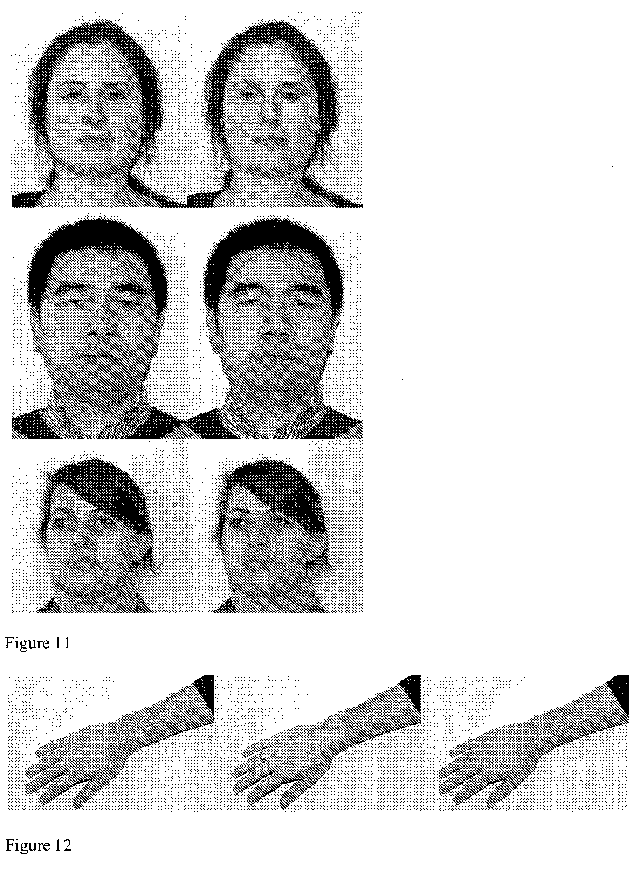

- Figure 11 : Realistically smoothed skin while preserving important features (the darkish blurred spot present in all the images results from dust being present on the sensor).

- Figure 12 : Enhanced vein patterns due to the use of NIR information and their softening by using the minimum of the two detail layers.

## Detailed description

### Image capture

The visible image, i.e. an RGB image that contains the information of the visible spectrum can be acquired using a conventional camera having a sensor that produces sensor response data. The second image, containing the near-infrared information, can be acquired by a camera that has a visible-light blocking filter (also called a NIR blocking filter) attached to it. The two images can also be acquired by the same camera if the hot mirror is removed. The hot mirror is a interference filter built into regular cameras to prevent near infrared radiation impinging on the sensor. If such a camera is used to capture the images, a hot mirror has to be affixed in front of the sensor to acquire the first image in the visible spectrum of the scene, followed by exchanging that filter for a NIR blocking filter to be able to acquire the second image that contains the near-infrared spectrum of the same or similar scene. The only adjustment between the shots is the focus, which is designed to obtain images of comparable sharpness. The raw outcome of this procedure is the input of our algorithm.

While we have up to know employed the word "images", the application of our proposed method is by no means limited to still photographic images captured consecutively with the same camera. Indeed, the relevant information can be acquired in a simultaneous manner, using either a single camera with a modified color filter array (CFA) or multiple cameras with a beamsplitter/prism (such as described in). A CFA usually contains at least three filters, one that allows capturing red light, one to capture green light, and one to capture blue light. The sensor response data from the visible part of the spectrum is thus the pixel values of the respective positions of the red, green, and blue filters. It is possible to extend the CFA and incorporate other filters, notably one that allows capturing near infrared. The sensor response data of the near-infrared part of the spectrum would then be extracted from the pixels covered by that filter.

Additionally, since the region of interest considered here is well defined (i.e., skin tones, faces in particular), our smoothing method can readily be implemented in a calibrated setup such as the one used in stereo imaging where two different cameras capture a similar, yet not identical scene. The images can then be registered using a software solution so that both images are aligned. We can also limit the processing (smoothing as described below and registration of the images) to the part of the image that actually contains a face, found with the help of a skin tones (or face) detector. The latter description is best suited in a controlled environment such as a photo booth or a studio setup. Note that camera here not only refers to cameras that are able to capture still images, but also cameras that capture video.

### Extracting intensity information

The first image thus contains the red, green, and blue (RGB) information of the scene, while the second image contains the near infrared information of the same or similar scene. In a first step, we need to extract the intensity information from the first, colour, image, leading to a one channel image that contains greyscale pixel values. There are several ways this can be done. Intensity information can generally be extracted by converting the three channel RGB color image first into an opponent colour representation, such as YCrCb, CIE Lab, CIE Luv, YCC, etc. or a hue-saturation-lightness representation, such as HSL, HSV, etc. Any one of these representations can be used in our application. The intensity information is then extracted by keeping the one channel that contains the greyscale information (e.g., L, Y, V). The other two channels, which contain colour information, are kept; they are used to obtain the smoothed colour image when they are combined with the combined visible and near-infrared intensity information.

For a three channel NIR image, intensity information can be extracted by either using just one of the three channels of the NIR image (in our experiments, we just used the NIR information given by the red channel of the NIR image), or by calculating an additive combination of all three channels. If we have a camera design that just gives us a one channel NIR image, then this channel contains the NIR intensity information.

### Decomposing the intensity information of visible and NIR images into base and detail layers and producing a combined intensity information image

Since NIR images contain all of a face's important features but (almost) none of the unwanted ones, it is a perfect candidate to be a detail layer. The visible image, on the other hand, contains the desired brightness and colour information, and is thus an ideal base layer.

In the following, we define base layer as the part of the image that contains mostly large-scale information (e.g., face, nose, ears) and brightness and color levels. The detail layer, on the other hand, is devised to contain mostly edges and contours (e.g., hairs, moles, freckles). They are not necessarily distinct depending on the method employed to obtain them. Common algorithms to decompose the intensity information of the image into such base and detail layers include Gaussian filtering, frequency domain decomposition (Fourier, wavelets, curvelets, etc.), Unsharp masking, all variants of the bilateral filter, weighted least squares decomposition, and so on. The methods on how to combine the different layers depend on the decomposition method chosen.

In the following, we detail three different methods to combine the second detail layer, i.e. the NIR detail information, with the base layer of the first image, i.e. the visible intensity image: luminance transfer, wavelet coefficient fusion, and detail layer fusion based on the bilateral filter, but note that any other decomposition technique can also be used. It is not necessary to combine the full information of the base layer or the detail layer, the present method can also extract some part of the detail layer for the combination with only a part of the base layer. Different parts here mean that only some regions (e.g. faces), and/or only some frequencies, and/or only some intensities of the detail layer and the base layer are combined.

**Luminance transfer**

In their work on colouring the near-infrared [7], Fredembach and Susstrunk proposed that the luminance of a regular colour image could be replaced by NIR information. This method functions well for most of outdoor scenes, albeit with a noticeable shift in colour when the luminance difference between NIR and visible is too large. See Fig. 7b.

**Wavelet image fusion**

As most undesirable features of portraits have a significant high-frequency component, one may turn to the frequency domain in order to obtain a meaningful decomposition of the image into low-frequency components (the skin itself) and high frequency ones (skin features, as well as eyes, hairs). To do so, we can use the wavelet coefficient fusion technique, useful because of its localisation property [14]. In a first step, the visible RGB image is transformed into the YCbCr colourspace. A wavelet decomposition is then performed on both the Y channel and the NIR image. Coefficients are calculated and, for the highpass versions of the image, the minimal coefficient between the Y and NIR are kept, and the image is then reconstructed. We have used here the Haar wavelet generator and four levels of decomposition, but other wavelet seeds and levels of decompositions can be used.

The difficulty in using this method stems from the large variety of the wavelet parameters (number of decompositions, wavelet seed used), as well as the diversity of skin features one aims to identify. As such, this method can be unreliable, as exemplified in Fig 7c, where half of the face is correctly smoothed, but the other one is not, due to a difference in image sharpness (implying that the relevant coefficients will be located in a different sub-band).

**Bilateral filter**

The bilateral filter, proposed by Tomasi et al. [13] is an edge-aware spatial filter that decomposes an image into base and detail layers. The base layer comprises mostly low frequency information with a small edge content, while the detail layer is primarily high-frequency information. Related to portrait images, the base layer is responsible for large, smooth, regions and the detail one for the stark, small-scale, changes across these large regions (see Fig. 8).

Given their size, most, if not all, of undesirable skin features will be located in the detail layer of the visible luminance image. Decomposing the NIR image will, however, yield a detail layer that contains all high-frequency information except for these conspicuously absent undesirable features. A simple method to smooth the image is therefore to fuse the detail layer of the NIR image with the base layer of the visible intensity. Chrominance information is then added, and the image is transformed back into RGB. The entire procedure is illustrated in Fig. 9, and a sample result, shown in Fig. 7d, exhibit a natural-looking smooth image.

A major drawback of the complete bilateral filter decomposition is its speed, we thus use here the fast bilateral filter proposed by Durand and Dorsey in [5], with no significant decrease in image quality.

**Brightness adjustment**

In order to have comparable detail layers, the NIR image is adjusted with respect to the visible intensity. Specifically, the mean value of the NIR image is shifted towards the one of the visible, and the histogram is then stretched by giving the NIR image a black and a white point. The result can be seen in Fig. 10.

**Results**

The results presented in Figs. 7d and 11 are all obtained with the bilateral method explained above. Every step is automatic, except the refocusing of the lens at the time of image capture. Importantly, the quality of the results does not depend on the type of skin considered.

**Combining the colour information of the first image with the combined intensity information**

It follows that one can decompose the visible into detail and base layers, either in the spatial or in the frequency domain, and then combine the NIR detail layer with the visible base layer to obtain an enhanced, realistic, image. Results show that the fast bilateral filter [5] is a good candidate as a decomposition function, and that realistic results are obtained across various skin types. However, other decomposition methods can also be employed.

The last step of combining the colour information of the first image with the combined intensity information depends on the which colour space is used to extract intensity information, and which decomposition method is applied. In a simple case like the bilateral filter and wavelet decomposition, as outlined above, the Cb and Cr channels are combined with the combined intensity image. The resulting YCbCr image is reconverted to an RGB image with the normal well known mathematical transform.

**From "Images" to Video**

For all intents and purposes, a video stream is nothing more than a (rapid) succession of still images. There is thus no inherent issue that would prevent our algorithm from being used on videos.

From a capture perspective, video offers other alternatives as a number of current video cameras have multiple (usually 3) sensor. Dedicating one sensor producing sensor response data to NIR capture can thus allow NIR and visible videos to be acquired simultaneously at no increase in cost. Barring that, TV/movie studio setups are by essence controlled environments, meaning that the photo booth/studio setup describe above is applicable here as well. Additionally, a four sensor setup can be considered, where 3 sensors are dedicated to capturing the visible part of the spectrum, such as red, green, and blue (i.e. they have a red, green, or blue filter transfixed to them), and the fourth sensor to capturing the NIR part of the spectrum. Similarly, a 2 sensor system consisting of one NIR-only sensor and one capturing visible light through a CFA is also possible. The incoming light is guided to the sensors thanks to a beamsplitter and/or several optical elements.

One of the main challenges in processing videos is the sheer volume of information as Full HD video consists of 30 2Mp (Mega-pixels) images/second. The algorithm we propose here is, however, applicable to videos as well, for the following reasons:

- An implementation of our method processes a 16Mp image in 2 seconds using Matlab, i.e, 4 2Mp images/second. The traditional upgrade chain Matlab-C++-GPU-FPGA offers (conservatively) an order of magnitude faster calculation at each step, meaning that a C++ implementation can already process about 40 2Mp images/second and an FPGA 4000 images/seconds.

- In compressed video formats (the ones actually used for broadcast), all frames are not equal: indeed only 1 frame out of 5 is a "key frame" that needs to be entirely processed. The other frames are simply calculated by encoding the difference to the closest key frame. Processing only the key frames decreases the speed requirements to 6 images/second.

Most TV shows (and all movies) are taped and not broadcasted live, real-time calculation is therefore not critical as long as the processing time is "reasonable".

**Skin behaviour across wavelengths**

To correctly understand and assess the usefulness of NIR in skin imaging, one needs to look at the wavelength dependency of skin appearance. Skin is very complex to model accurately because of the number of different parameters that need to be taken into account. Indeed, it is not merely a planar reflectance, but truly a translucent, inhomogeneous, material. Absorption, reflection, and scattering effects all have to be considered. We present here a simplified model that explains skin behaviour in the NIR. For a more thorough study of the different parameters involved in skin appearance, we refer the reader to [9].

The schematic model of Fig. 2 depicts the structure of skin. The two main areas of interest for imaging are the epidermis and the dermis. The epidermis, also called "melanin layer" is responsible for most of the pigmented coloration of the skin. It is the melanin concentration that gives the skin a colour that can vary from pale to dark brown. The epidermis layer is otherwise fairly thin and no significant scattering occurs. Just underneath the epidermis lies the dermis layer. In this layer, significant scattering occurs as well as hemoglobin absorption (giving the skin its reddish shade).

The main parameters needed to represent light transport in the skin are the absorption coefficient $\mu_a$ and the

reduced scattering coefficient $\mu_{s'}$ used to express multiple scattering. The absorption coefficients of the epidermis $\mu_{a,epi}$ and the dermis $\mu_{a,der}$ can be represented as [10]:

$$\mu_{a,epi} = f_{mel}\mu_{a,mel} + (1 - f_{mel})\mu_{a,skin} \tag{1}$$

$$\mu_{a,der} = f_{blood}\mu_{a,blood} + (1 - f_{blood})\mu_{a,skin} \tag{2}$$

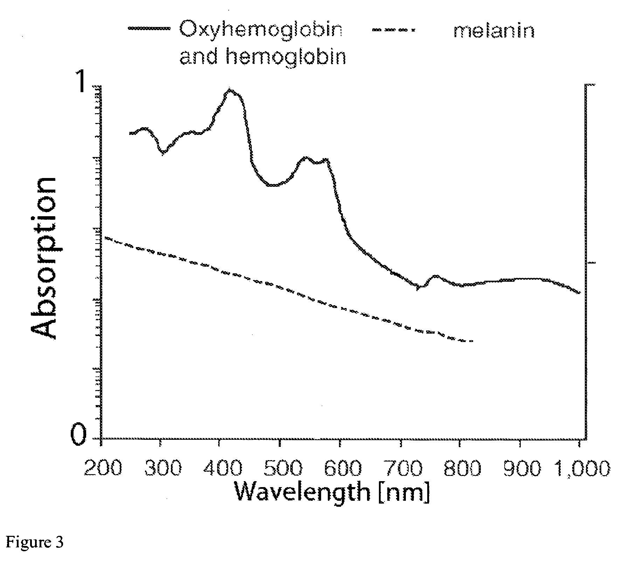

Where $f_{blood}$ and $f_{mel}$ are the concentration of blood and melanosomes, and $\mu_{a,mel}, \mu_{a,blood}, \mu_{a,skin}$ are the absorption coefficients of hemoglobin, melanin, and skin layer without any chromophores. All the absorption coefficients are wavelength dependent, $\mu_{a,mel}, \mu_{a,blood}$ can be derived from their respective reflectance spectra (see Fig. 3), while the skin layer can be approximated as:

$$\mu_{a,skin} = 0.244 + 82.3 \exp\left(-\frac{(\lambda - 154)}{66.2}\right) \tag{3}$$

Jacques, [10] proposed that the reduced scattering coefficient of the dermis could be approximated as:

$$\mu_{s}^{'} = 2 \times 10^{5} \lambda^{-1.5} + 2 \times 10^{12} \lambda^{-4} \tag{4}$$

i.e., the longer the wavelength, the less scattered the light is.

Looking at (1)-(4) and Fig. 3, one realises that NIR light, due to its longer wavelengths, will be less absorbed and less scattered than visible light, therefore penetrating deeper into the skin layers. As such, NIR skin images will contain less "surface features" than normal colour images, a key quality for our smoothing algorithm.

**Near-infrared skin images**

In this section, we explore in greater details the different undesired skin "features" that can be smoothed in NIR images using near-infrared images. Specifically, we look at the reasons why NIR images are ideal candidates, and illustrate the potential improvement that can be obtained by using them in conjunction with traditional colour images.

**Pigmentation**

Under pigmentation, we refer to the dark brown marks that can be found on the surface of the skin. These details, called freckles, spots, or moles, depending on their thickness, are pigment deposits of melanin with well defined contours over the skin layers. Such pigmentation structures generally become more frequent with age, or excessive exposition to UV light, but are also often present in people with fair skin. As such, the contrast between these melanin deposits and the skin can be striking and undesired.

As shown in Fig. 3, melanin does not absorb NIR wavelength nearly as much as visible light. Consequentially, NIR images of these regions will not display these melanin-rich regions, resulting in a "freckle-free" image. The exact degree of attenuation of pigmentation nonetheless depends on the thickness of the deposits, a feature illustrated in Fig. 4.

**Shallow wrinkles**

Wrinkles, distortion of the dermis caused by water-loss or a loss of elasticity are among the most conspicuous and less-desired features of human skin. The depths of wrinkles vary according to their location and the age of the person. Eye corner wrinkles for instance (perhaps the most common one in portraits) are, on average, $100\mu m$ deep for people in their twenties, but almost $700\mu m$ deep for those aged 60 and older (although the variance is significant), as measured by [1].

To put these numbers in perspective, we look at light propagation in skin. The lesser scattering and absorption at longer wavelengths (see previous section) implies that the depth of penetration of incident light is wavelength-dependent. Specifically, at 550nm (the local maxima absorption of hemoglobin), light penetrates up to $400\mu m$ in the skin. At $800\mu m$, however, this figure is closer to 850mm [2]. As a result, this increased depth will decrease the visibility of shallow wrinkles (since the relative difference of skin depth is less important than the light's intrinsic penetration). This phenomenon is illustrated in Fig. 5 where the perceived strength of wrinkles is noticeably diminished.

Of course, the potential improvement induced by using NIR data decreases when the wrinkles become deeper or in the case of superposed skin layers (e.g., eyelids). In this case, some smoothing still occurs, but the features stay mostly untouched.

**Skin texture smoothing**

Deeper light penetration combined with the relative transparency of hemoglobin and melanin to NIR allow for more unwanted features to be smoothed out. Flushed skin, visible capillaries, rash, and acne are all features that are visible in the surface of the skin but whose visibility is decreased in the near-infrared; see the disappearing redness around the eyes in Fig. 6.

**Detail preservation**

While small scale skin features are generally attenuated in the near-infrared, images that contain skin also contain other features that should be preserved. For instance, in portrait images, high-frequency features such as the distinction between skin, eyes, iris, and pupil has to remain. Additionally, hair-based features (e.g., hair, eyelashes, beard) have to remain as sharp as in the original image. A key advantage of NIR images is that they indeed preserve such important features, in all their details (see Fig. 6). It follows that one can realistically use NIR information to obtain a faithful enhanced image.

**Enhancing portraits using near-infrared information**

A common trait of the undesirable skin features discussed previously is that they all have well-defined contours in the visible, but almost none in the near-infrared image. Colour-wise, freckles and moles share the skin coloration (as it is a melanin concentration issue), and so do other, hemoglobin-related, features. Finally, wrinkles are basically edges within an otherwise low-frequency skin region.

The combination of these characteristics, added to the fact that NIR images preserve otherwise relevant details, make the visible image intensity a prime candidate for NIR modification in order to obtain smooth skin while preserving relevant details.

**Veins**

If body parts other than faces are considered, an interesting occurring artefact is an enhanced contrast in vein patterns. Indeed, blood significantly absorbs NIR, thus making veins more prominent (a property actually used in biometrics [15]). A way to minimise these artefacts is to fuse the minimum of both the visible and NIR detail layers with the visible base instead of simply fusing the NIR detail layer with the visible base layer. The result of such a procedure is shown in Fig. 12.

**Conclusions**

Near-infrared wavelengths are not as much scattered or absorbed by skin as visible ones. NIR skin images therefore exhibit much less unwanted "features" than their visible counterparts. Using a standard image capture framework, we propose that the visible intensity image and the NIR one can be decomposed into base and detail layer. Combining the detail layer of the NIR image with the base layer of the visible one yields images that are noticeably smoother, yet that preserve important high-frequency details. The proposed algorithm is able to process full resolution images in a matter of seconds and is reliable, irrespectively of the considered skin types.

**Bibliographic References**

[1] S Akazaki, H Nakagawa, H Kazama, O Osanai, M Kawai, Y Takema, and G Imokawa. "Age-related changes in skin assessed by a novel three-dimensional morphometric analysis". British Journal of Dermatology, 147:689-695, 2002.

[2] R R Anderson and J A Parrish. "Optical Properties of Human Skin", chapter 6. Plenum Pres., 1982.

[3] T Arici and S Dikbas. "Skin-aware local contrast enhancement". In Proceedings of the IEEE International Conference on Image Processing, pages 521-524, 2007.

[4] C Dubout, M Tsukada, R Ishiyama, C Funayama, and S Süsstrunk. "Face image enhancement using 3d and spectral information". In IEEE International Conference on Image Processing, 2009.

[5] F Durand and J Dorsey. "Fast bilateral filtering for the display of high-dynamic-range images". Proceedings of ACM SIGGRAPH, pages 257-266, 2002.

[6] H Endo. "Imaging device performing focus adjustment based on human face information". US Patent Application 2007/0280662, 2007.

[7] C Fredembach and S Süsstrunk. "Colouring the near-infrared'. In Proceedings of the 16th IS&T/SID Color Imaging Conference, Portland, OR, 2008.

[8] M Gaubatz and R Ulichney. "Automatic red-eye detection and correction". In Proceedings of the IEEE International Conference on Image Processing, pages 804-807. IEEE, 2002.

[9] T Igarashi, K Nishino, and S K Nayar. "The appearance of human skin: A survey". Foundations and Trends in Computer Graphics and Vision, 3: 1-95, 2007.

[10] S L Jacques. "Skin optics". Oregon Medical Laser Center Monthly news and articles on Biomedical Optics and Medical Lasers, 1998.

[11] S Z Li, R Chu, S Liao, and L Zhang. "Illumination invariant face recognition using near-infrared images". IEEE Transactions on Pattern Analysis and Machine Intelligence, 29:627-639, 2007.

[12] L. Schaul, C Fredembach, and S. Susstrunk. "Color image dehazing using the near-infrared". In IEEE International Conference on Image Processing, 2009.

[13] C Tomasi and R Manduchi. "Bilateral filtering for gray and color images". In IEEE Sixth International Conference on Computer Vision, pages 839-846, Bombay, India, 1998.

[14] P M De Zeeuw, G Piella, and H J A M Heijmans. "A matlab toolbox for image fusion (matifus)". CWI report: PNA-E0424, 2004.

**Claims**

1.  Method to produce a full-color smoothed image wherein the visibility of skin features that can be deemed less appealing is attenuated, **characterized in that** it comprises the steps of :

    - acquiring a first image in the visible spectrum of a scene,
    - acquiring a second image in the near infra-red spectrum of the same or similar scene,
    - decomposing the first image into intensity information and color information,
    - extracting intensity information from the first image, leading to an image that contains greyscale pixel values,
    - decomposing the intensity information from the first image into a first detail layer and a first base layer,
    - decomposing intensity information of the second image into a second detail layer and a second base layer,
    - combining all or part of the second detail layer with all or part of the first base layer to produce a combined intensity information,
    - combining the color information of the first image directly with the combined intensity information to produce the full-color smoothed image.

2.  Method of claim 1, wherein it comprises a step of registering the first and the second image so that both images are aligned.

3.  Method of claims 1 or 2, wherein the decomposition into a base and a detail layer is performed using a bilateral filter.

**4.** Method of any of the claims 1 to 3, wherein the first and second image are acquired sequentially.

**5.** A camera to produce a full-color smoothed image wherein the visibility of skin features that can be deemed less appealing is attenuated, **characterized in that** it comprises at least one sensor having sensor response data and means to read the sensor response data from the visible part of the spectrum and the sensor response data from the near-infrared part of the spectrum simultaneously, means to acquire a first image in the visible spectrum of a scene, and a second image in the near infra-red spectrum of the same or similar scene, means to decompose the first image into intensity information and color information, means to extract the intensity information from the first image, and means to decompose the intensity information from the first image into a first detail layer and a first base layer, and to decompose intensity information of the second image into a second detail layer and a second base layer, means to combine all or part of the second detail layer with all or part of the first base layer to produce a combined intensity information, and means to produce full-color smoothed image by combining the color information of the first image directly with the combined intensity information.

**6.** The camera according of claims 5, wherein it comprises means to read the sensor response data from the visible part of the spectrum and the sensor response data from the near-infrared part of the spectrum sequentially.

**7.** The camera according to claims 5 or 6, wherein it comprises two sensors, one dedicated to the visible part of the spectrum and having a colour filter array having visible light filters and the other one dedicated to the near-infrared part of the spectrum and having near-infrared filters, the camera further comprising a beam splitter and/or optical elements to direct incoming light to the sensors.

**8.** The camera according to claims 5 or 6, wherein it comprises four sensors, three dedicated to the visible part of the spectrum having visible light filters and the other one dedicated to the near-infrared part of the spectrum and having near-infrared filters, the camera further comprising a beam splitter and/or optical elements to direct incoming light to the sensors.

**9.** The camera according to any of the claims 5 to 7, wherein it comprises means to only process part of the images corresponding to predefined human face position.

**Patentansprüche**

**1.** Verfahren zur Herstellung eines vollfarbigen, geglätteten Bildes, wobei die Sichtbarkeit von Hautmerkmalen, die als weniger attraktiv gelten können, abgeschwächt wird, **gekennzeichnet dadurch, dass** es folgende Phasen umfasst:

- Beschaffung eines ersten Bildes in dem sichtbaren Spektrum einer Szene,
- Beschaffung eines zweiten Bildes im Nahinfrarotspektrum derselben oder einer ähnlichen Szene,
- Zerlegen des ersten Bildes in Intensitätsinformationen und Farbinformationen,
- Gewinnen der Intensitätsinformationen aus dem ersten Bild, was zu einem Bild führt, das Graustufen-Pixelwerte enthält,
- Zerlegen der Intensitätsinformationen aus dem ersten Bild in eine erste Detailschicht und eine erste Basisschicht,
- Zerlegen der Intensitätsinformationen des zweiten Bildes in eine zweite Detailschicht und eine zweite Basisschicht,
- Kombinieren der ganzen oder eines Teils der zweiten Detailschicht mit der ganzen oder eines Teils der ersten Basisschicht, um kombinierte Intensitätsinformationen herzustellen,
- direktes Kombinieren der Farbinformationen des ersten Bildes mit den kombinierten Intensitätsinformationen, um das vollfarbige, geglättete Bild herzustellen.

**2.** Verfahren nach Anspruch 1, wobei es eine Phase des Registrierens des ersten und des zweiten Bildes umfasst, so dass beide Bilder ausgerichtet sind.

**3.** Verfahren nach Anspruch 1 oder 2, wobei die Zerlegung in eine Basis- und eine Detailschicht unter Verwendung eines bilateralen Filters durchgeführt wird.

**4.** Verfahren nach einem beliebigen der Ansprüche 1 bis 3, wobei das erste und zweite Bild sequentiell beschafft werden.

**5.** Kamera zur Herstellung eines vollfarbigen, geglätteten Bildes, bei dem die Sichtbarkeit von Hautmerkmalen, die als weniger attraktiv gelten können, abgeschwächt wird, **gekennzeichnet dadurch, dass** sie mindestens einen Sensor mit Sensorantwortdaten und Mittel zum gleichzeitigen Lesen der Sensorantwortdaten aus dem sichtbaren Teil des Spektrums und der Sensorantwortdaten aus dem Nahinfrarotteil des Spektrums umfasst sowie Mittel, um ein erstes Bild im sichtbaren Spektrum einer Szene zu beschaffen, und ein zweites Bild im Nahinfrarotspektrum derselben oder einer ähnlichen Szene, Mittel zum Zerlegen des ersten Bildes in Intensitätsinformationen und Farbinformationen, Mittel, um die Intensitätsinformationen aus dem ersten Bild herauszuziehen, und Mittel zum Zerlegen der Intensitätsinformationen aus dem ersten Bild in eine erste Detailschicht und eine erste Basisschicht, und zum Zerlegen der Intensitätsinformationen des zweiten Bildes in eine zweite Detailschicht und eine zweite Basisschicht, Mittel, um die ganze oder einen Teil der zweiten Detailschicht mit der ganzen oder einem Teil der ersten Basisschicht zu kombinieren, um kombinierten Intensitätsinformationen herzustellen, und Mittel zur Herstellung eines vollfarbigen, geglätteten Bildes durch direktes Kombinieren der Farbinformationen des ersten Bildes mit den kombinierten Intensitätsinformationen.

**6.** Kamera nach Anspruch 5, mit Mitteln zum sequentiellen Lesen der Sensorantwortdaten aus dem sichtbaren Teil des Spektrums und der Sensorantwortdaten aus dem Nahinfrarotteil des Spektrums.

**7.** Kamera nach Anspruch 5 oder 6, mit zwei Sensoren, der eine für den sichtbaren Teil des Spektrums mit einer Farbfilteranordnung mit Filtern für sichtbares Licht und der andere für den Nahinfrarotteil des Spektrums und mit Nahinfrarotfiltern, wobei die Kamera des weiteren einen Strahlteiler und/oder optische Elemente umfasst, um ankommendes Licht auf die Sensoren zu richten.

**8.** Kamera nach Anspruch 5 oder 6, mit vier Sensoren, drei für den sichtbaren Teil des Spektrums mit Filtern für sichtbares Licht und der andere für den Nahinfrarotteil des Spektrums und mit Nahinfrarotfiltern, wobei die Kamera des weiteren einen Strahlteiler und/oder optische Elemente umfasst, um ankommendes Licht auf die Sensoren zu richten.

**9.** Kamera nach einem beliebigen der Ansprüche 5 bis 7, wobei sie Mittel umfasst, um nur einen Teil der Bilder zu verarbeiten, entsprechend vordefinierter Position des menschlichen Gesichts.

## Revendications

**1.** Méthode pour produire une image lissée en couleurs dans laquelle la perception de particularités de la peau qui peuvent être estimées comme moins attrayantes est atténuée, **caractérisée en ce qu'**elle comprend les étapes consistant à:

- acquérir une première image d'une scène dans le spectre du visible,
- acquérir une seconde image d'une scène identique ou similaire dans le spectre du proche infrarouge,
- décomposer la première image en une information d'intensité et en une information de couleur,
- extraire l'information d'intensité de la première image, conduisant à une image qui contient des valeurs de pixel de niveaux de gris,
- décomposer l'information d'intensité issue de la première image en une première couche de détail et en une première couche de base,
- décomposer l'information d'intensité de la seconde image en une seconde couche de détail et en une seconde couche de base,
- combiner tout ou partie de la seconde couche de détail avec tout ou partie de la première couche de base pour produire une information d'intensité combinée,
- combiner l'information de couleur de la première image directement avec l'information d'intensité combinée pour produire l'image lissée en couleurs.

**2.** Méthode selon la revendication 1, **caractérisée en ce qu'**elle comprend une étape de mise en registre de la première et seconde image de façon à ce que les deux images soient alignées.

**3.** Méthode selon la revendication 1 ou 2, **caractérisée en ce que** la décomposition en une couche de base et en une couche de détail est effectuée en utilisant un filtre bilatéral.

**4.** Méthode selon l'une quelconque des revendications 1 à 3, **caractérisée en ce que** la première et seconde image sont acquises séquentiellement.

5. Appareil photographique pour produire une image lissée en couleurs dans laquelle la perception de particularités de la peau qui peuvent être estimées comme moins attrayantes est atténuée, **caractérisé en ce qu'**il comprend au moins un capteur ayant des données de réponse de détection et des moyens pour lire simultanément les données de réponse de détection issues de la partie visible du spectre et les données de réponse de détection issues de la partie proche infrarouge du spectre, des moyens pour acquérir une première image d'une scène dans le spectre du visible et une seconde image d'une scène identique ou similaire dans le spectre du proche infrarouge, des moyens pour décomposer la première image en une information d'intensité et en une information de couleur, des moyens pour extraire l'information d'intensité de la première image, et des moyens pour décomposer l'information d'intensité issue de la première image en une première couche de détail et en une première couche de base et pour décomposer une information d'intensité de la seconde image en une seconde couche de détail et en une seconde couche de base, des moyens pour combiner tout ou partie de la seconde couche de détail avec tout ou partie de la première couche de base afin de produire une information d'intensité combinée, et des moyens pour produire l'image lissée en couleurs en combinant directement l'information de couleur de la première image avec l'information d'intensité combinée.

6. Appareil photographique selon la revendication 5, **caractérisé en ce qu'**il comprend des moyens pour lire séquentiellement les données de réponse de détection issues de la partie visible du spectre et les données de réponse de détection issues de la partie proche infrarouge du spectre.

7. Appareil photographique selon la revendication 5 ou 6, **caractérisé en ce qu'**il comprend deux capteurs, l'un dédié à la partie visible du spectre et doté d'une matrice de filtres de couleur ayant des filtres à lumière visible, et l'autre dédié à la partie proche infrarouge du spectre et pourvu de filtres proche infrarouge, l'appareil photographique comprenant en outre un miroir semi-réfléchissant et/ou des éléments d'optique pour rediriger la lumière entrante vers les capteurs.

8. Appareil photographique selon la revendication 5 ou 6, **caractérisé en ce qu'**il comprend quatre capteurs, trois dédiés à la partie visible du spectre dotés de filtres à lumière visible et le dernier dédié à la partie proche infrarouge du spectre et pourvu de filtres proche infrarouge, l'appareil photographique comprenant en outre un miroir semi-réfléchissant et /ou des éléments d'optique pour rediriger la lumière entrante vers les capteurs.

9. Appareil photographique selon l'une quelconque des revendications 5 à 7, **caractérisé en ce qu'**il comprend des moyens pour ne traiter qu'une partie des images correspondant à une position prédéfinie d'un visage humain.

Figure 1

Figure 2

Figure 3

Figure 4

Figure 5

Figure 6

Figure 7

Figure 8

Figure 9

Figure 10

Figure 11

Figure 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1675384 A2
- US 20070280662 A

### Non-patent literature cited in the description

- **XIAOPENG ZHANG et al.** *Enhancing photographs with Near Infra-Red images*
- **S AKAZAKI ; H NAKAGAWA ; H KAZAMA ; O OSANAI ; M KAWAI ; Y TAKEMA ; G IMOKAWA.** Age-related changes in skin assessed by a novel three-dimensional morphometric analysis. *British Journal of Dermatology,* 2002, vol. 147, 689-695
- **R R ANDERSON ; J A PARRISH.** Optical Properties of Human Skin. Plenum Pres, 1982
- **T ARICI ; S DIKBAS.** Skin-aware local contrast enhancement. *Proceedings of the IEEE International Conference on Image Processing,* 2007, 521-524
- **C DUBOUT ; M TSUKADA ; R ISHIYAMA ; C FUNAYAMA ; S SÜSSTRUNK.** Face image enhancement using 3d and spectral information. *IEEE International Conference on Image Processing,* 2009
- **F DURAND ; J DORSEY.** Fast bilateral filtering for the display of high-dynamic-range images. *Proceedings of ACM SIGGRAPH,* 2002, 257-266
- **H ENDO.** *Imaging device performing focus adjustment based on human face information''*
- **C FREDEMBACH ; S SÜSSTRUNK.** Colouring the near-infrared. *Proceedings of the 16th IS&T/SID Color Imaging Conference,* 2008
- Automatic red-eye detection and correction. **M GAUBATZ ; R ULICHNEY.** Proceedings of the IEEE International Conference on Image Processing. IEEE, 2002, 804-807
- **T IGARASHI ; K NISHINO ; S K NAYAR.** The appearance of human skin: A survey. *Foundations and Trends in Computer Graphics and Vision,* 2007, vol. 3, 1-95
- **S L JACQUES.** Skin optics. *Oregon Medical Laser Center Monthly news and articles on Biomedical Optics and Medical Lasers,* 1998
- **S Z LI ; R CHU ; S LIAO ; L ZHANG.** Illumination invariant face recognition using near-infrared images. *IEEE Transactions on Pattern Analysis and Machine Intelligence,* 2007, vol. 29, 627-639
- **L. SCHAUL ; C FREDEMBACH ; S. SUSSTRUNK.** Color image dehazing using the near-infrared. *IEEE International Conference on Image Processing,* 2009
- **C TOMASI ; R MANDUCHI.** Bilateral filtering for gray and color images. *IEEE Sixth International Conference on Computer Vision,* 1998, 839-846
- **P M DE ZEEUW ; G PIELLA ; H J A M HEIJMANS.** A matlab toolbox for image fusion (matifus). *CWI report: PNA-E0424,* 2004